(19) Europäisches Patentamt
European Patent Office
Office européen des brevets

(11) **EP 4 364 551 B1**

(12) **EUROPEAN PATENT SPECIFICATION**

(45) Date of publication and mention
of the grant of the patent:
**10.09.2025  Bulletin 2025/37**

(21) Application number: **23203680.6**

(22) Date of filing: **16.10.2023**

(51) International Patent Classification (IPC):
*A01D 34/10* (2006.01)     *A01D 34/68* (2006.01)
*A01D 34/69* (2006.01)     *A01D 69/02* (2006.01)
*A01D 69/08* (2006.01)     *A01D 42/08* (2006.01)
*E01H 5/00* (2006.01)       *E01H 5/09* (2006.01)

(52) Cooperative Patent Classification (CPC):
**A01D 34/6812; A01D 34/69; E01H 5/098**

(54) **HAND-PROPELLED WORKING MACHINE**

HANDGEFÜHRTE ARBEITSMASCHINE

MACHINE DE TRAVAIL À PROPULSION MANUELLE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **01.11.2022  CN 202211356858**

(43) Date of publication of application:
**08.05.2024  Bulletin 2024/19**

(73) Proprietor: **Nanjing Chervon Industry Co., Ltd.
Nanjing, Jiangsu 211106 (CN)**

(72) Inventors:
• **WANG, Peng
Nanjing (CN)**
• **FENG, Jifeng
Nanjing (CN)**

(74) Representative: **Sun, Yiming
HUASUN Patent- und Rechtsanwälte
Friedrichstraße 33
80801 München (DE)**

(56) References cited:
**JP-B2- 4 467 065        US-A1- 2017 265 385
US-A1- 2022 071 096**

## Description

## TECHNICAL FIELD

The present invention relates to the field of hand-propelled working machines and, in particular, to a control method of a transmission mechanism of a hand-propelled working machine.

## BACKGROUND

Snow throwers, sweepers, and mowers are common hand-propelled working machines. The hand-propelled working machines have the advantages of convenient and quick operation, working efficiency, and manpower saving. At present, the hand-propelled working machines have been widely applied to indoor and outdoor places such as gardens and shopping malls.

A hand-propelled working machine generally uses a self-propelled motor for driving wheels to rotate, where a clutch is provided between an output shaft of the self-propelled motor and the wheels. When the self-propelled motor drives the wheels to travel, the clutch needs to be set in a locked state so that the motor drives the wheels to rotate through the clutch. When the self-propelled motor stops driving the wheels, the clutch needs to be set in an unlocked state, so as to avoid reverse torque exerted by the wheels on the self-propelled motor.

In the existing art, a method for adjusting a state of the clutch is to rotate the wheels to drive the clutch to be shut down and tripped. When the motor stops driving the wheels, a user pushes and pulls or rotates the wheels so that the wheels rotate to drive the clutch to be automatically unlocked and enter the unlocked state. When the motor is started, the clutch automatically enters the locked state.

This part provides background information related to the present invention, which is not necessarily the existing art.

Document US 20220071096A1 discloses a walk-behind self-propelled machine, which includes: a body, wheels, a handle connected to the body, a motor, a driver coupled to the motor and driven by the motor, and a follower coupled to the wheels and enabled to drive the wheels to rotate, and a clutch. The clutch allows the driver to transmit power to the follower when the clutch is in a first position, the clutch cuts off a power transmission path between the motor and the wheels when the clutch is in a second position, the clutch is rotatably mounted to the driver, the clutch is in contact with the follower when the clutch rotates to the first position, and the clutch is disengaged from the follower when the clutch rotates to the second position.

## SUMMARY

An object of the present invention is to solve or at least alleviate part or all of the preceding problems.

Therefore, an object of the present invention is to provide a hand-propelled working machine, which can solve the problem where a clutch of an existing hand-propelled working machine cannot be shut down and tripped when a user pushes and pulls or rotates wheels and thus fails to be unlocked and can improve the reliability of the shutdown and the trip of the clutch. Preferred embodiments of the invention are defined in dependent claims attached.

The present invention has the following benefits: the problem is solved where the clutch of the existing hand-propelled working machine cannot be shut down and tripped when the user pushes and pulls or rotates the wheels and thus fails to be unlocked, and after the operation member of the hand-propelled working machine is released, the clutch is automatically tripped from the motor through rotational speed control, which is conducive to improving the reliability of the shutdown and the trip of the clutch, thereby avoiding damages to parts due to a failure to unlock the clutch, improving device reliability, and prolonging the service life of the working machine.

## BRIEF DESCRIPTION OF DRAWINGS

FIG. 1 is a perspective view of a hand-propelled working machine as an example of the present invention;

FIG. 2 is a structural diagram of a hand-propelled working machine according to an example of the present invention;

FIG. 3 is a structural view of a clutch according to an example of the present invention;

FIG. 4 is an exploded view of the clutch of FIG. 3 from one angle;

FIG. 5 is an exploded view of the clutch of FIG. 3 from another angle;

FIG. 6 is a structural diagram of a controller of a hand-propelled working machine according to an example of the present invention;

FIG. 7 is a flowchart of a control method of a hand-propelled working machine according to an example of the present invention;

FIG. 8 is a diagram of a control principle of a snow throwing system of a hand-propelled working machine according to an example of the present invention;

FIG. 9 is a perspective view of a snow throwing system of a hand-propelled working machine according to an example of the present invention;

FIG. 10 is a structural diagram of a control system of a snow throwing system of a hand-propelled working machine according to an example of the present invention;

FIG. 11 is a flowchart of a control method of a snow throwing member in a snow throwing system according to an example of the present invention; and

FIG. 12 is a flowchart of a control method of a deflector in a snow throwing system according to an example of the present invention.

## DETAILED DESCRIPTION

In this invention, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this invention, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this invention generally indicates that the contextual associated objects belong to an "and/or" relationship.

In this invention, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this invention, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this invention, those skilled in the art will understand that a function performed by an assembly may be performed by one assembly, multiple assemblies, one member, or multiple members. Likewise, a function performed by a member may be performed by one member, an assembly, or a combination of members.

In this invention, the terms "up", "down", "left", "right", "front", and "rear" " and other directional words are described based on the orientation or positional relationship shown in the drawings, and should not be understood as limitations to the examples of this invention. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this invention, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this invention, the term "device", "module" or "unit" may be implemented in the form of hardware or software to achieve specific functions.

In this invention, the terms "computing", "judging", "controlling", "determining", "recognizing" and the like refer to the operations and processes of a computer system or similar electronic computing device (e.g., controller, processor, etc.).

The present invention is described below in detail in conjunction with drawings and examples.

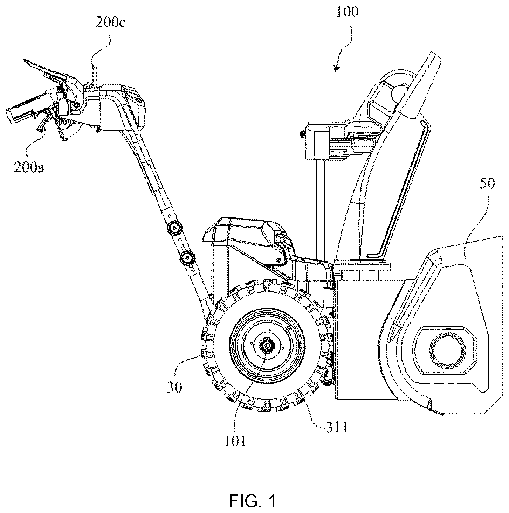

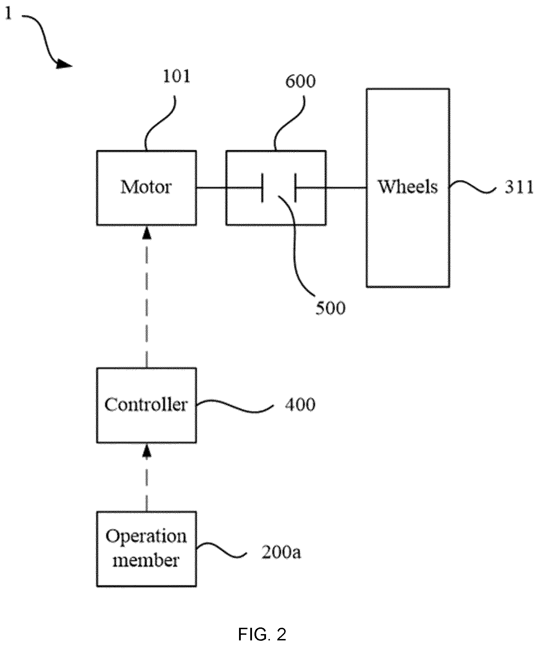

FIG. 1 is a perspective view of a hand-propelled working machine as an example of the present invention. The hand-propelled working machine may be used for performing outdoor operations. FIG. 2 is a structural diagram of a hand-propelled working machine according to the present invention. Specifically, the hand-propelled working machine is a snow thrower 1.

As shown in FIGS. 1 and 2, the snow thrower 1 includes a body 100 and an operation member 200a connected to the body 100. The body 100 is a support structure of the snow thrower 1, and the operation member 200a may include, but is not limited to, an operation handle, a drive trigger, a power trigger, and an operation panel for a user to operate. Specifically, operation handles may be disposed on both the left and right sides of the operation member 200a, separately, so as to facilitate a push operation of the user. The snow thrower 1 further includes a traveling wheel group 30 for supporting the body 100. In this example, the traveling wheel group 30 includes at least wheels 311. Two wheels 311 may be provided to be convenient to support the body 100 and keep the body 100 balanced.

The snow thrower includes a motor 101 for driving the wheels 311 to rotate, thereby driving the snow thrower to be self-propelled. The snow thrower 1 further includes a transmission mechanism 600 disposed between the motor 101 and the wheels 311. The transmission mechanism 600 is configured to implement transmission between a motor shaft and the wheels 311. Specifically, the transmission mechanism has a first state and a second state. When the transmission mechanism 600 is in the second state, the wheels 311 are rotatable freely relative to the motor shaft. In some examples, the transmission mechanism 600 includes at least a clutch 500 and a gear and a transmission shaft connected to the clutch 500. Specifically, the clutch 500 has a first state and a second state and is switchable between the first state and the second state. It is to be understood that when the clutch 500 is in the first state, the transmission mechanism is in the first state, and when the clutch 500 is in the second state, the transmission mechanism is in the second state. In some examples, the first state of the clutch 500 may be a locked state, and the second state of the clutch 500 may be an unlocked state. When the clutch 500 is in the locked state, the motor 101 may drive the wheels 311 to travel. When the clutch 500 is in the unlocked state, the self-propelled motor 101 is disengaged from the wheels 311, and the wheels 311 are rotatable freely relative to the motor 101. In other words, when the clutch 500 or the transmission mechanism is in the second state, no torque is exerted on the motor 101 when the user pushes and pulls or rotates the wheels 311 with an external force. When the clutch 500 is in the second state, the motor 101 is disengaged from the wheels 311.

In the related art, when the motor 101 of the snow thrower is in an off state, the user drags the snow thrower to rotate the wheels 311 in any direction by a certain angle, and the wheels 311 drive the clutch 500 to be unlocked and enter the unlocked state. With heavy snow for the snow thrower, a rotor of the motor 101 is easily locked, and the user pushes and pulls or rotates the wheels with relatively great effects. When the wheels 311 cannot be dragged with manpower to rotate, the case occurs where the clutch 500 cannot be easily tripped from the motor 101. Thus, the clutch 500 fails to be unlocked, causing damages to some parts and components and affecting system reliability.

To solve the preceding problem, according to the technical solutions of the present invention, a controller 400 controls a target rotational speed of the motor 101 to be a negative rotational speed so that the motor 101 rotates reversely. The reverse rotation of the motor 101 drives the clutch 500 to enter the unlocked state, thereby achieving the automatic shutdown and trip of the clutch 500.

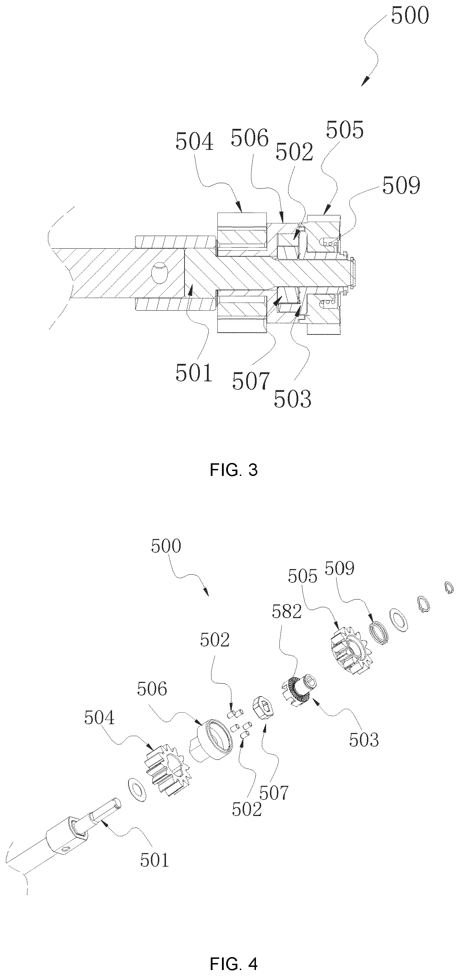

FIG. 3 is a structural view of a clutch according to an example of the present invention.

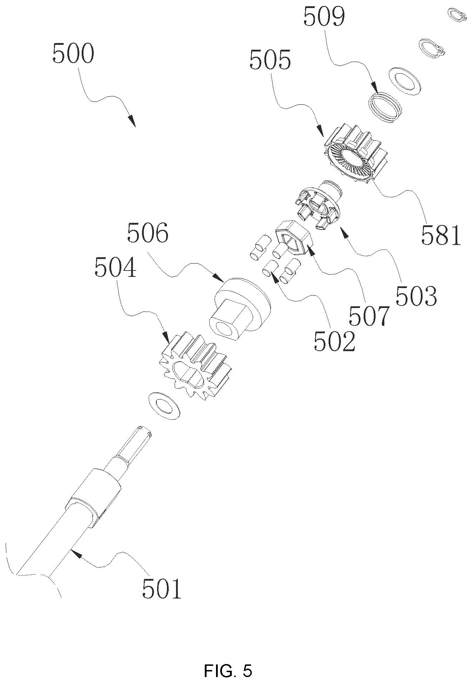

FIG. 4 is an exploded view of the clutch of FIG. 3 from one angle. FIG. 5 is an exploded view of the clutch of FIG. 3 from another angle.

Next, a control method for switching the clutch 500 between the first state and the second state in the present invention is described in conjunction with FIGS. 3 to 5.

As shown in FIGS. 3 to 5, the motor 101 includes the motor shaft, and the motor shaft drives the wheels 311 to rotate. The clutch 500 is disposed between the motor 101 and the wheels 311 to implement transmission between the motor shaft and the wheels 311. The clutch 500 includes a transmission shaft 501, a movable member 502, a drive dial 503, and an outer ring member 506. The transmission shaft 501 is driven by the motor shaft to rotate to drive the wheels 311 to rotate. A gearbox is provided between the transmission shaft 501 and the motor shaft. Thus, the motor shaft drives the transmission shaft 501 to rotate, and a rotational speed of the transmission shaft 501 is smaller than a rotational speed of the motor shaft. The movable member 502 moves between a locked position and an unlocked position relative to the transmission shaft 501. Specifically, the movable member 502 may be a pin. When the movable member 502 is at the locked position, the transmission shaft 501 drives the wheels 311 to rotate. When the movable member 502 is at the unlocked position, the wheels 311 are rotatable freely relative to the transmission shaft 501. That is, when the wheels 311 rotate clockwise or counterclockwise, the wheels 311 do not drive the transmission shaft 501 to rotate. The drive dial 503 is driven by the wheels 311 to move the movable member 502 between the locked position and the unlocked position.

As shown in FIGS. 1 to 5, the transmission mechanism 600 between the motor 101 and the wheels 311 further includes a first transmission gear 505, a second transmission gear 504, a fixing member 507, and an elastic member 509. The first transmission gear 505 includes a first connecting portion 581, the drive dial 503 includes a second connecting portion 582, and the second connecting portion 582 can mesh with the first connecting portion 581 so that the first transmission gear 505 and the drive dial 503 rotate in the same direction.

When the motor 101 is in a working state or when the motor shaft rotates actively, the transmission shaft 501 is driven to rotate, and the transmission shaft 501 rotates to drive the second transmission gear 504 to rotate, thereby driving the wheels 311 to rotate. For a more detailed structural description of the clutch and how to switch between a first state and a second state, please refer to Chinese Patent Application CN202210652688.6 filed on June 10, 2022.

Specifically, the motor shaft of the motor 101 is controlled to enter a reverse rotation mode, a direction of rotation of the motor shaft is opposite to a direction of rotation in a self-driving state, and the motor shaft rotates by a certain angle so that the transmission shaft 501 actively rotates by a certain angle to move the movable member 502 from the locked position to the unlocked position. Thus, the clutch is unlocked so that the user can conveniently push or pull the snow thrower.

In some examples, the operation member 200a is electrically connected to the controller 400 to control the motor 101 to operate. Specifically, the operation member 200a has a first operation state for controlling the motor 101 to start and a second operation state for controlling the motor to stop. When switched from the first operation state to the second operation state, the operation member 200a outputs a first signal. The controller 400 is configured to set the target rotational speed of the motor 101 to a first rotational speed when acquiring that the operation member 200a is switched from the first operation state to the second operation state so that the clutch 500 is switched from the first state to the second state. In other words, the controller 400 adjusts the state of the clutch 500 by controlling the rotational speed of the self-propelled motor 101.

The first signal may be a shutdown instruction signal.

In some examples, the first signal may be any one of a local shutdown signal or a remote shutdown signal.

In this example, the first signal may be a shutdown instruction signal outputted from the operation member 200a, that is, the user outputs the shutdown instruction signal by releasing the operation member 200a of the hand-propelled working machine. Specifically, the operation member 200a includes at least the drive trigger for the user to operate, the drive trigger has a triggered state and a released state, and the controller 400 controls the motor 101 to rotate at least when the drive trigger is in the triggered state. The controller 400 is further configured to acquire the first signal outputted when the trigger is switched from the triggered state to the released state.

In some examples, the remote shutdown signal may be acquired by a remote communication module, and the user may perform shutdown control on the working machine by using an application of a mobile phone or another smart terminal so that the clutch 500 is switched from the first state to the second state, that is, the shutdown and the trip of the clutch are achieved. The user may output the local shutdown signal or the remote shutdown signal as the shutdown instruction signal, thereby achieving diversified shutdown control.

In some examples, the first signal is the local shutdown signal, for example. The user may output the shutdown instruction signal by releasing the operation member 200a. After receiving the first signal outputted from the operation member 200a, the controller 400 may set the target rotational speed of the motor 101 to the first rotational speed. The first rotational speed is a negative rotational speed. After the motor 101 stops rotating forwardly, the motor continues the reverse rotation since the target rotational speed is the negative rotational speed.

Specifically, in conjunction with FIGS. 1 and 2, in the working process of the snow thrower 1, the controller 400 is configured to control the rotational speed of the motor 101 by using a vector control strategy. In some examples, the control method of the controller 400 includes a field weakening control method. After receiving the shutdown instruction signal (that is, the first signal) delivered by the operation member 200a, the controller 400 sets the target rotational speed to the first rotational speed (that is, the negative rotational speed). In other words, the rotational speed of the motor 101 is controlled with the set negative rotational speed as the target, and the motor 101 enters a reverse rotation state from a forward rotation state to drive the clutch 500 to switch from the first state to the second state so that the wheels 311 are disengaged from the motor 101, and the wheels 311 can rotate freely relative to the motor 101, thereby achieving the shutdown and the trip of the clutch 500.

In some examples, an absolute value of the first rotational speed is greater than or equal to 100 rpm. In other words, in the control of the rotational speed, the absolute value of the set negative rotational speed is greater than or equal to 100 rpm.

In this example, the first rotational speed is set to -2000 rpm.

Specifically, in conjunction with FIGS. 1 and 2, in the vector control strategy, a proportional-integral (PI) controller may be provided to perform closed-loop adjustment on the rotational speed of the self-propelled motor 101. After acquiring the first signal outputted from the operation member 200a, the controller 400 sets the target rotational speed of the motor 101 to a relatively large negative rotational speed. After proportional-integral control, an actual rotational speed of the motor 101 gradually changes from a positive rotational speed to the negative rotational speed, and the motor 101 rotates reversely to drive the clutch 500 to switch from the first state to the second state so that the wheels 311 are disengaged from the motor 101. According to a proportional-integral control principle, the greater a difference between the target rotational speed and a current rotational speed of the motor 101, the larger parameter the proportional-integral controller outputs and the shorter time it takes for the motor 101 to rotate reversely for the trip. In the examples of the present invention, the absolute value of the first rotational speed is set to be greater than or equal to 100 rpm so that the clutch 500 is shut down and tripped with higher efficiency, thereby ensuring that the clutch 500 is completely tripped from the motor 101 in a short time and avoiding damages to parts due to a long-time reverse rotation of the motor 101.

The invention provides the snow thrower 1. The snow thrower 1 includes the body 100, the traveling wheel group 30, the motor 101, the controller 400, the transmission mechanism 600, and the operation member 200a. The transmission mechanism 600 has the first state and the second state. When the transmission mechanism 600 is in the second state, the wheels 311 are rotatable freely relative to the motor shaft. The controller 400 sets the target rotational speed of the motor 101 to the first rotational speed when acquiring that the operation member 200a is switched from the first operation state to the second operation state so that the transmission mechanism 600 can be switched from the first state to the second state, where the first rotational speed is the negative rotational speed. Thus, the clutch 500 is switched from the first state to the second state, that is, the clutch 500 can be switched from the locked state to the unlocked state. In this manner, after the operation member 200a is released, the controller 400 controls the rotational speed of the motor 101 to switch the clutch 500 between the first state and the second state. In one aspect, it is conducive to improving the reliability of the shutdown and the trip of the clutch 500, avoiding damages to parts due to a failure to unlock the clutch 500, improving device reliability, and prolonging the service life of the working machine. In the other aspect, the motor rotates reversely to drive the clutch to move to the unlocked position, which replaces the existing technical solution where the wheels are dragged to drive the clutch to be shut down and tripped and solves the problem of a difficulty in dragging wheels of a snow thrower with a large weight and a large volume to rotate reversely for the trip, and after the trip is completed, the user can conveniently push or pull the snow thrower, avoiding the rotation of the self-propelled motor due to the backward pulling of the snow thrower.

In some examples, with continued reference to FIGS. 1 and 2, when the clutch 500 is switched from the first state to the second state, a rotational speed of the wheels 311 is equal to or approximates to zero.

Specifically, an optimal value of the first rotational speed may be acquired through calibration, where the value of the first rotational speed satisfies that the motor 101 rotates reversely for a period of time at a negative rotational speed less than or equal to the first rotational speed to gradually drive the motor 101 to be disengaged from the wheels 311. At this time, a positive rotational speed of the wheels 311 gradually decreases. When the wheels 311 stop rotating, the clutch 500 just enters the second state (that is, the unlocked state), thereby preventing the wheels 311 from being driven by the reverse rotation of the motor 101 to rotate reversely.

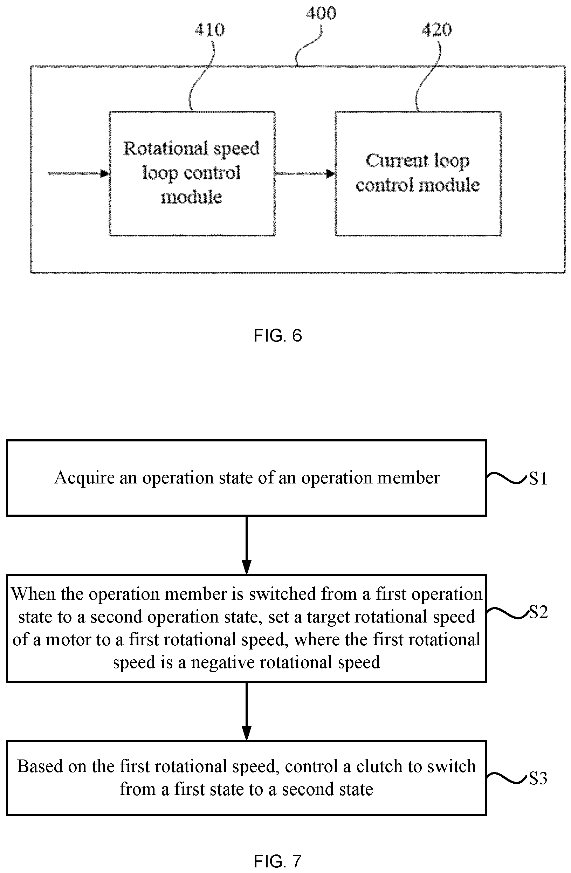

Optionally, FIG. 6 is a structural diagram of a controller of a hand-propelled working machine according to an example of the present invention. As shown in FIG. 6, the controller 400 includes at least a rotational speed loop control module 410 and a current loop control module 420, where the rotational speed loop control module 410 and the current loop control module 420 both adopt a vector control method.

Referring to FIGS. 1 to 6, the current loop control module 420 may convert current vectors of three-phase coils in the motor 101 into two constant current vectors, then the two constant vectors are inputted into the controller 400, processed, and inversely converted into three voltage vectors, and finally the motor 101 is controlled by a spatial vector pulse-width modulation technique so that the motor 101 can be controlled, thereby achieving closed-loop control. The target rotational speed is an input parameter of the rotational speed loop control module 410.

In some examples, the motor 101 may be a permanent-magnet synchronous motor, and the commutation of a current may be implemented by a three-phase inverter circuit.

Specifically, an output parameter of the rotational speed loop control module 410 may be used as an input parameter of the current loop control module 420. The rotational speed loop control module 410 is provided with a PI controller. The target rotational speed is used as the input parameter of the rotational speed loop control module 410. The PI controller performs proportional-integral processing on the difference between the target rotational speed and the actual rotational speed of the motor 101 and provides current input parameters (for example, $i_d^*$ and $i_q^*$ ) for the current loop control module 420. The current loop control module 420 acquires, based on current sampling, three-phase currents ($i_a$, $i_b$, and $i_c$) in a three-phase stator coordinate system (where current vectors of two phases of the three-phase coils may be obtained through sampling and the last phase may be calculated according to Kirchhoff's current law). After Clark transformation, two orthogonal time-varying current vectors may be obtained. The two orthogonal time-varying current vectors obtained above are inputted into the controller for Park transformation, and two orthogonal constant vectors may be obtained after the processing. Then, errors between the time-varying current vectors and the orthogonal constant vectors are calculated separately and inputted into the PI controller. After processing, the voltage vectors to be applied to the motor are outputted. The voltage vectors obtained above are subjected to inverse Park transformation, and then the motor 101 is controlled by the spatial vector pulse-width modulation technique to achieve the closed-loop control.

In some examples, referring to FIGS. 1 to 3, the controller 400 is further configured to acquire a reverse rotation parameter of the motor and control, based on the acquired reverse rotation parameter, the motor 101 to shut down. Specifically, the controller 400 is configured to output a shutdown control signal according to the number of revolutions of reverse rotation of the motor 101 or a time of reverse rotation of the motor 101 to perform brake control on the motor 101. In some examples, when the acquired number of revolutions of reverse rotation of the motor 101 is greater than or equal to a first threshold, the self-propelled motor is controlled to shut down. The first threshold is greater than or equal to 1 revolution and less than or equal to 100 revolutions. In some examples, when the acquired time of reverse rotation of the self-propelled motor 101 is greater than or equal to a second threshold, the self-propelled motor is controlled to shut down. The second threshold is greater than or equal to 10 ms and less than or equal to 500 ms.

The shutdown control signal may be a three-phase short-circuit control signal for controlling three phases of a driver circuit to be short-circuited. It is to be understood that when the user releases the operation member 200a of the snow thrower, the input parameter of the rotational speed loop control module may be set to -2000 rpm, that is, the target rotational speed is -2000 rpm. When the clutch 500 in the snow thrower is switched from the first state to the second state, the motor 101 stops rotating forwardly and continues the reverse rotation since the target rotational speed is negative. The number of revolutions of reverse rotation or the time of reverse rotation of the motor 101 is set. When the number of revolutions of reverse rotation or the time of reverse rotation of the motor 101 reaches a set value, the controller 400 may output the shutdown control signal, that is, the three-phase short-circuit control signal to control the three phases of the driver circuit to be short-circuited, so as to perform the brake control on the motor 101. This process is the whole process of shutdown, reverse rotation, and unlocking, that is, after the operation member 200a is released, the clutch 500 is tripped from the motor 101. Therefore, the user pushes and pulls or rotates the wheels without driving the motor 101 to rotate so that the clutch 500 can be prevented from a trip failure and be successfully unlocked.

In some examples, the number of revolutions of reverse rotation may be 10 revolutions, and the time of reverse rotation may be 100 ms. When the clutch 500 of the snow thrower is switched from the first state to the second state, the motor 101 stops rotating forwardly and continues the reverse rotation since the target rotational speed is negative. When the number of revolutions of reverse rotation reaches 10 revolutions or the time of reverse rotation reaches 100 ms, the controller 400 may output the shutdown control signal, that is, the three-phase short-circuit control signal to control the three phases of the driver circuit to be short-circuited, so as to perform the brake control on the motor 101.

It is to be noted that too small a number of revolutions of reverse rotation or too short a time of reverse rotation cannot ensure a complete trip; and too large a number of revolutions of reverse rotation or too long a time of reverse rotation causes the motor 101 to continue to drive the wheels 311 to rotate reversely, resulting in the problem where the complete trip fails in a long time. A lower limit of the number of revolutions of reverse rotation or the time of reverse rotation is set so that an effective trip between the motor 101 and the clutch 500 can be ensured. An upper limit of the number of revolutions of reverse rotation or the time of reverse rotation is set so that the wheels 311 can be prevented from continuing to rotate reversely.

Based on the same inventive concept, the present invention further provides a control method of a hand-propelled working machine, which is used for controlling the hand-propelled working machine according to any one of the preceding examples.

FIG. 7 is a flowchart of a control method of a hand-propelled working machine according to an example of the present invention.

As shown in FIG. 7, the control method includes the steps below.

In step S1, an operation state of an operation member is acquired.

The operation state includes at least a first operation state for controlling a motor to start and a second operation state for controlling the motor to stop.

In step S2, when the operation member is switched from the first operation state to the second operation state, a target rotational speed of the motor is set to a first rotational speed, where the first rotational speed is a negative rotational speed.

In step S3, based on the first rotational speed, a clutch is controlled to switch from a first state to a second state.

The first state may be a locked state, and the second state may be an unlocked state.

Therefore, in the control method provided by the present invention, the operation state of the operation member is acquired, and the target rotational speed of the self-propelled motor is set to the negative rotational speed according to the operation state so that the clutch 500 is switched from the locked state to the unlocked state, thereby solving the problem of a trip failure of the clutch 500 of an existing hand-propelled working machine, facilitating a trip between the motor 101 and the clutch 500 after the operation member 200a of the hand-propelled working machine is released, and achieving the shutdown and the trip of the clutch.

In some other examples, the controller 400 is configured to acquire a device parameter of the snow thrower and when the device parameter meets a preset condition, control the target rotational speed of the motor to be the first rotational speed so that the clutch 500 is switchable from the first state to the second state, where the first rotational speed is the negative rotational speed.

The preset condition includes at least one of a normal shutdown condition of the snow thrower or a fault shutdown condition of the working machine. The device parameter includes a related parameter of the operation member, a battery pack, or the motor of the snow thrower.

In some examples, when the snow thrower is normally shut down, the user controls the operation member such as the trigger to switch from the triggered state to the released state, and the controller controls the target rotational speed of the motor to be the first rotational speed. Of course, only a specific implementation of the operation member is described here for example. Those skilled in the art can implement the function of the operation member in another form, such as a button, a touchscreen, or wireless control. Here, the operation member is used at least for controlling the motor to start and stop.

In some examples, when detecting a temperature abnormality of the battery pack or an undervoltage of the battery pack, the controller controls the motor to shut down. Specifically, when detecting an abnormal signal of the battery pack, the controller controls the target rotational speed of the motor to be the first rotational speed. Of course, only some faults of the battery pack are described above for example. It is to be understood that any parameter related to the battery pack and causing the shutdown of the motor may be used as the preset condition.

In some examples, the preceding preset condition further includes abnormal communication between snow throwers, an overtemperature of an MOS of a host, an overcurrent of the motor, a locked rotor of the motor, and the like.

All in all, the preset condition in this example is to be understood as conditions causing the shutdown of the motor. When these conditions are met, the controller controls the target rotational speed to be the first rotational speed so that the motor can rotate reversely before shutdown to disengage the clutch.

Specifically, referring to FIGS. 1 and 2, before the snow thrower is powered on, a preset condition parameter corresponding to the preset condition is set. For example, the preset condition parameter may be a preset condition parameter related to the operation member 200a, the battery pack, or the motor 101 of the snow thrower. When the snow thrower is working, the controller 400 acquires the device parameter of the operation member 200a, the battery pack, or the motor 101 of the snow thrower in real time. When the acquired real-time device parameter matches the preset condition parameter in the preset condition, the controller 400 determines that the device parameter meets the preset condition and can control the target rotational speed of the motor 101 to be the first rotational speed so that the clutch 500 can be switched from the first state to the second state, that is, the clutch 500 can be switched from the locked state to the unlocked state.

In some other examples, the controller 400 is configured to, when the device parameter meets the preset condition, control the hand-propelled working machine to stop traveling forward. To control the hand-propelled working machine to stop traveling forward means to control the wheels of the hand-propelled working machine to stop rotating.

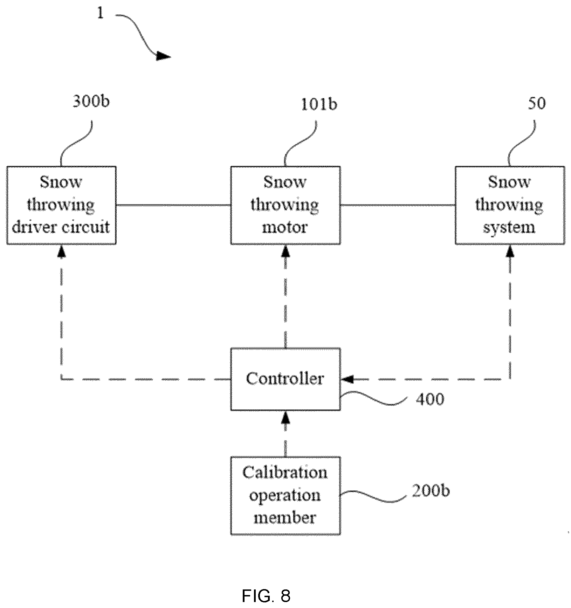

In some examples, referring to FIG. 1, the snow thrower 1 further includes a snow throwing system 50. FIG. 8 is a diagram of a control principle of a snow throwing system of a hand-propelled working machine according to an example of the present invention.

Referring to FIGS. 1 and 8, the hand-propelled working machine 1 includes the body 100, the snow throwing system 50 connected to the body 100; a snow throwing motor 101b for driving the snow throwing system 50 to move along an operation direction; the controller 400 electrically connected to the snow throwing motor 101b and configured to output a control signal to control the snow throwing motor 101b to rotate; and a calibration operation member 200b electrically connected to the controller 400 to control the snow throwing motor 101b to operate. The controller 400 is configured to, after acquiring an angle calibration instruction signal outputted from the calibration operation member 200b, send a first limit position calibration instruction to a snow throwing driver circuit 300b to control the snow throwing motor 101b to operate so that the snow throwing system 50 moves to a first limit position (for example, a right limit position); send a second limit position calibration instruction to the snow throwing driver circuit 300b to control the snow throwing motor 101b to operate so that the snow throwing system 50 moves to a second limit position (for example, a left limit position); and perform middle position angle calibration on the snow throwing system 50 according to a position parameter of the first limit position and a position parameter of the second limit position.

The first limit position and the second limit position are two opposite limit positions in any operation direction of the snow throwing system 50. When the middle position angle calibration is performed, a middle position in any operation direction may be calculated according to two opposite limit positions in the operation direction and written into a memory, and an angle calibration mode is exited after the writing is completed to complete an angle calibration task.

In some examples, the calibration operation member 200b may be one or a combination of a key, a tooling panel, or a switchboard key for the user to operate. Before the hand-propelled working machine leaves the factory, the user operates the calibration operation member 200b to achieve one-key calibration.

In some other examples, the calibration operation member 200b may be a smart terminal. During use of the hand-propelled working machine, when a deviation of the middle position is found with the snow throwing system, the angle calibration instruction signal may be delivered through the key or the smart terminal. After receiving the angle calibration instruction signal, the controller 400 controls the snow throwing system 50 to act and acquires and stores calibration information to achieve the one-key calibration.

With the snow thrower as an example, a control method for the middle position angle calibration of the snow throwing system is further described.

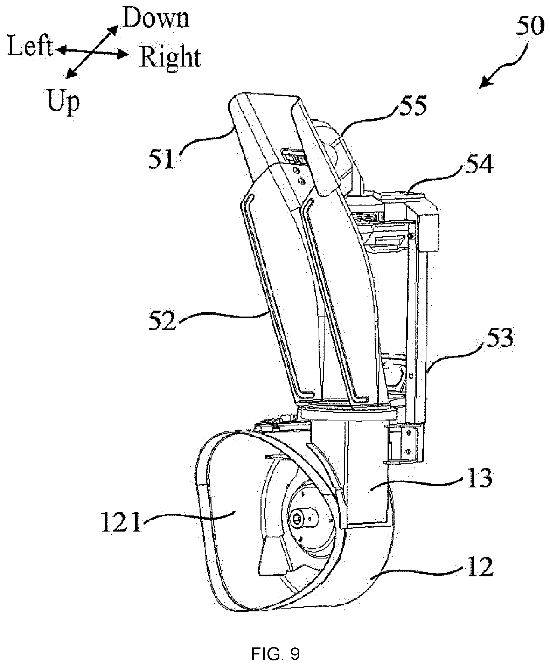

FIG. 9 is a perspective view of a snow throwing system of a hand-propelled working machine according to an example of the present invention.

Referring to FIGS. 1, 8, and 9, the snow throwing system 50 includes at least a deflector 51 and a snow throwing member 52, where the snow throwing member 52 surrounds a semi-closed channel and is defined with an opening. A first end of the snow throwing member 52 is rotatably connected to the body 100 to communicate a second receiving space 121 with the outside. That is to say, the snow throwing member 52 connects the snow throwing paddle housing 12 to the deflector 51 to form a continuous channel for snow removal. The deflector 51 is mounted to a second end of the snow throwing member 52. In this example, the deflector 51 is mounted to the top of the snow throwing member 52. Snow is thrown into the air after passing through the snow throwing paddle housing 12, a snow outlet tube 13, the snow throwing member 52, and the deflector 51. The snow throwing system further includes a first drive unit 54 and a second drive unit 55. The first drive unit 54 is connected to an upper or middle part of the snow throwing member 52 and configured to drive the snow throwing member 52 to rotate about a first axis relative to the body 100. The second drive unit 55 is connected to the deflector 51 and configured to drive the deflector 51 to rotate about a second axis relative to the snow throwing member 52. The snow throwing system further includes a support rod 53 extending in an up and down direction and configured to support at least the first drive unit 54. A first end of the support rod 53 is fixed to the snow outlet tube 13 and extends in the up and down direction to form a second end, and the first drive unit 54 is fixedly mounted to the second end of the support rod 53. In some examples, the support rod 53 is composed of a first rod portion and a second rod portion, where the first rod portion and the second rod portion are locked by a locking assembly and detachably connected so that the snow throwing system can be detached from the body 100, thereby facilitating transportation and saving a storage space.

In the examples of the present invention, in conjunction with FIGS. 8 and 9, the middle position angle calibration of the snow throwing system 50 includes, but is not limited to, middle position angle calibration of the deflector 51 and middle position angle calibration of the snow throwing member 52. The deflector 51 moves along a first direction (for example, the up and down direction), and the middle position angle calibration of the deflector 51 is to calibrate an angle value of a middle position of the deflector 51 in the first direction. The snow throwing member 52 moves along a second direction (for example, a left and right direction), and the middle position angle calibration of the snow throwing member 52 is to calibrate an angle value of a middle position of the snow throwing member 52 in the second direction.

In some examples, the snow throwing member 52 moves within a range of 100° on the left side and 100° on the right side of the angle of the middle position, and the deflector 51 moves within a range of 30° on the upper side and 30° on the lower side of the angle of the middle position.

In some examples, the deflector 51 and the snow throwing member 52 may be controlled to enter the angle calibration mode by a special combination of the tooling plate or the switchboard key.

In some examples, during the middle position angle calibration, the snow throwing member 52 and the deflector 51 may simultaneously or individually move to a rightmost position and a leftmost position or an uppermost position and a lowermost position, respectively, and angles of limit positions are recorded.

In some examples, during the middle position angle calibration, the deflector 51 and the snow throwing member 52 operate at a speed smaller than or equal to their movement speed during a cleaning operation.

In some examples, a gear ratio structure may be used between the motor and the snow throwing system.

In some examples, after the middle position angle calibration is completed, the calculated angles of the middle positions may be uploaded to an Internet of Things system to be convenient for the user to view through the smart terminal such as a mobile phone.

In some examples, when the user feels that the angles of the middle positions deviate due to mechanical abrasion, the user may control, through the smart terminal such as the mobile phone, the snow thrower to enter the angle calibration mode to re-calibrate the angles of the middle positions.

In some examples, an application in the smart terminal may evaluate the accuracy of the angles of the middle positions according to specific parameters (for example, angles fed back in real time) in the angle calibration mode and score the accuracy. When a score of the accuracy is lower than a set score threshold, the user is prompted and advised to perform angle calibration.

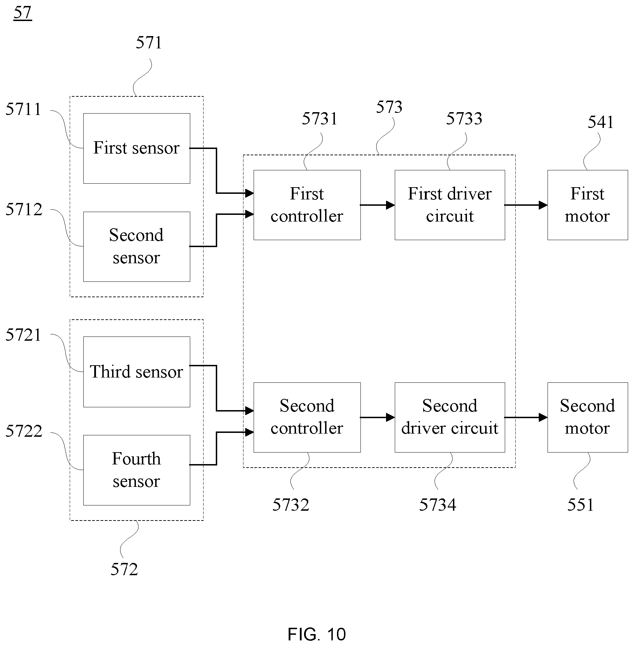

In some examples, FIG. 10 is a structural diagram of a control system of a snow throwing system of a hand-propelled working machine according to an example of the present invention.

Referring to FIGS. 1 and 8 to 10, the snow throwing system 50 further includes a control unit 57 configured to control operation states of the first drive unit 54 and the second drive unit 55. The control unit 57 includes a first sensing unit 571, a second sensing unit 572, and a circuit board assembly 573. The first sensing unit 571 is configured to detect an operation member 200c and an angle of the snow throwing member 52 in the second direction (for example, the left and right direction). The second sensing unit 572 is configured to detect the operation member 200c and an angle of the deflector 51 in the first direction (for example, the up and down direction). The circuit board assembly 573 is disposed above the first drive unit 54.

With continued reference to FIGS. 1 and 8 to 10, the operation member 200c may be operated by the user to adjust an angle of rotation of the snow throwing member 52 about the first axis and an angle of rotation of the deflector 51 about the second axis relative to the snow throwing member 52. The first axis is located on a first output shaft of the first drive unit 54, and the second axis is located on a second output shaft of the second drive unit. It is to be noted that the first axis is perpendicular to the second axis.

Specifically, the operation member 200c is configured to be an operation handle for the user to hold. A hand of the user can hold and rotate the operation handle in a front and rear direction, in the left and right direction, or in the front and rear direction and the left and right direction simultaneously. For example, the user controls the operation member 200c to rotate left while controlling the operation member 200c to rotate forward. In the examples of the present invention, when the user operates the operation member 200c to rotate left or right, the snow throwing member 52 correspondingly rotates left or right about the first axis. When the user operates the operation member 200c to rotate forward or backward, the deflector 51 correspondingly rotates forward or backward about the second axis. Of course, the operation member 200c may be implemented in other manners, and an implementation manner of the operation member 200c is not limited in the examples of the present invention.

With continued reference to FIGS. 1, 9, and 10, in the examples of the present invention, the first sensing unit 571 includes a first sensor 5711 and a second sensor 5712. Specifically, the first sensor 5711 is configured to detect an angle of a calibration operation member 200b in the left and right direction, and the second sensor 5712 is configured to detect the angle of the snow throwing member 52 in the left and right direction.

In the examples of the present invention, the second sensing unit 572 includes a third sensor 5721 and a fourth sensor 5722. Specifically, the third sensor 5721 is configured to detect an angle of the calibration operation member 200b in the front and rear direction, and the fourth sensor 5722 is configured to detect the angle of the deflector 51 in the up and down direction.

In some examples, the first sensor 5711, the second sensor 5712, the third sensor 5721, and the fourth sensor 5722 may adopt magnetic coding sensors. In this example, the magnetic coding sensors need to be calibrated before put into use.

In some other examples, other forms of sensor may be used for acquiring the corresponding angles, for example, contactless magnetic coding sensors may be selected.

It is to be noted that a device cost of a contact magnetic coding sensor is lower than that of a contactless magnetic coding sensor. The first sensor 5711, the second sensor 5712, the third sensor 5721, and the fourth sensor 5722 may be one type of sensor or may be implemented by multiple types of sensor. In the examples of the present invention, the types and number of the first sensor 5711, the second sensor 5712, the third sensor 5721, and the fourth sensor 5722 are not limited.

In some examples, the circuit board assembly 573 includes at least a first controller 5731, a second controller 5732, a first driver circuit 5733 electrically connected to the first controller 5731, and a second driver circuit 5734 electrically connected to the second controller 5732. The first controller 5731 is configured to control the first driver circuit 5733 to drive a first motor 541 to operate. The second controller 5732 is at least configured to control the second driver circuit 5734 to drive a second motor 551 to operate. Specifically, the first driver circuit 5733 and the second driver circuit 5734 are configured to be three-phase bridge circuits. The first driver circuit 5733 includes three electronic switches configured as high-side switches and three electronic switches configured as low-side switches. Similarly, the second driver circuit 5734 includes three electronic switches configured as high-side switches and three electronic switches configured as low-side switches.

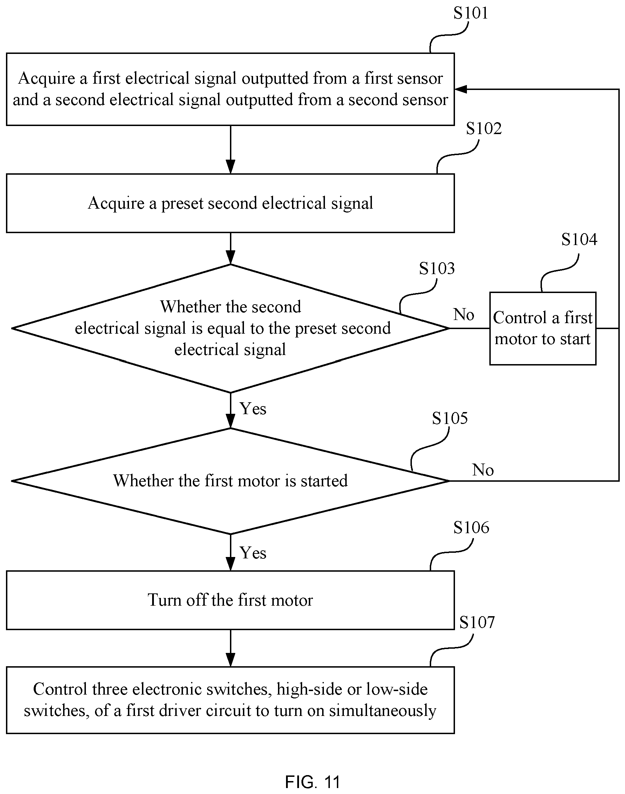

Next, a control method of the snow throwing member of the snow throwing system is described in conjunction with FIG. 11. FIG. 11 is a flowchart of a control method of a snow throwing member in a snow throwing system according to an example of the present invention. An example of the control method of the snow throwing member is shown.

As shown in FIG. 11, the method includes the steps below.

In S101, a first electrical signal outputted from the first sensor and a second electrical signal outputted from the second sensor are acquired.

In S102, a preset second electrical signal is acquired.

In S103, it is determined whether the second electrical signal is equal to the preset second electrical signal. If yes, step S105 is performed. If no, step S104 is performed.

In S104, the first motor is controlled to start. The process returns to step S101.

In S105, it is determined whether the first motor is started. If yes, step S106 is performed. If no, step S101 is performed.

In S106, the first motor is turned off.

In S107, three electronic switches, the high-side or low-side switches, of the first driver circuit are controlled to turn on simultaneously.

With continued reference to FIGS. 1, 9, and 10, the first controller 5731 is electrically connected to the first sensor 5711 and the second sensor 5712 and configured to acquire the angle of the calibration operation member 200b in the left and right direction and the angle of the snow throwing member 52 in the left and right direction, separately. Specifically, the first controller 5731 acquires, in real time, the first electrical signal outputted from the first sensor 5711 and the second electrical signal outputted from the second sensor 5712 and controls an on state of the first motor 541 based on the first electrical signal and the second electrical signal. Specifically, the first controller 5731 sets the preset second electrical signal based on the acquired first electrical signal and compares the preset second electrical signal with the acquired second electrical signal. When the second electrical signal is different from the preset electrical signal, the first motor 541 is controlled to start to drive the snow throwing member 52 to rotate about the first axis so that the angle of the snow throwing member 52 in the left and right direction corresponds to the angle of the calibration operation member 200b in the left and right direction. After the first motor 541 is started, the first controller 5731 acquires the first electrical signal and the second electrical signal in real time until the acquired second electrical signal is the preset second electrical signal, and the first motor 541 is controlled to turn off after a period of time.

Specifically, the calibration operation member 200b is rotatable within an angle range of about 0° to 80° in the left and right direction, and the snow throwing member 52 is rotatable about the first axis within an angle range of about 0° to 200°. That the angle of the snow throwing member 52 in the left and right direction corresponds to the angle of the calibration operation member 200b in the left and right direction may be understood as that when a current angle of the calibration operation member 200b is 0°, the angle of the snow throwing member 52 is set to 0°; when the current angle of the calibration operation member 200b is 40°, the angle of the snow throwing member 52 is set to 100°; when the current angle of the calibration operation member 200b is 80°, the angle of the snow throwing member 52 is set to 200°. When the current angle of the calibration operation member 200b is 20°, the angle of the snow throwing member 52 is set to 50°.

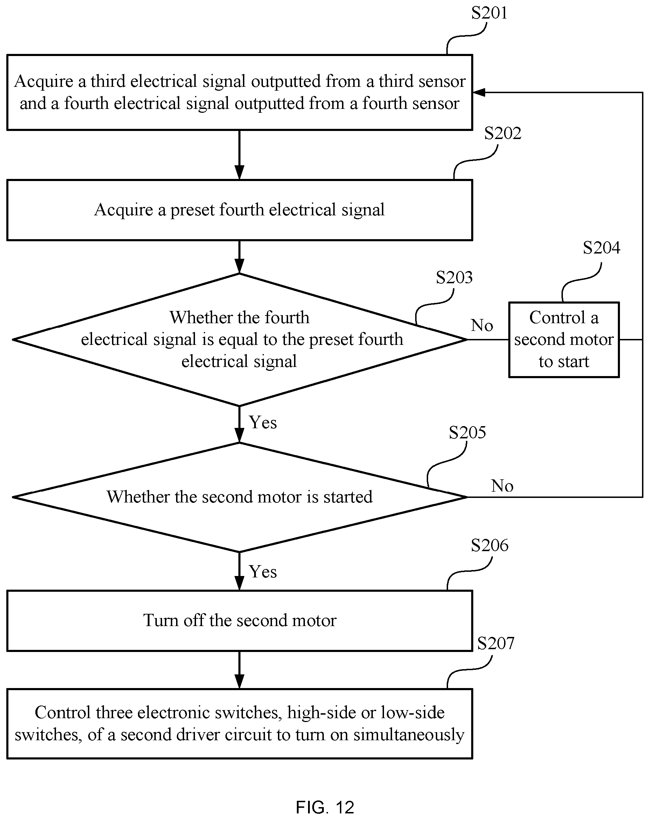

Next, a control method of the deflector of the snow throwing system is described in conjunction with FIG. 12. FIG. 12 is a flowchart of a control method of a deflector in a snow throwing system according to an example of the present invention. An example of the control method of the deflector is shown.

As shown in FIG. 12, the method includes the steps below.

In S201, a third electrical signal outputted from the third sensor and a fourth electrical signal outputted from the fourth sensor are acquired.

In S202, a preset fourth electrical signal is acquired.

In S203, it is determined whether the fourth electrical signal is equal to the preset fourth electrical signal. If yes, step S205 is performed. If no, step S204 is performed.

In S204, the second motor is controlled to start.

The process returns to step S201.

In S205, it is determined whether the second motor is started. If yes, step S206 is performed. If no, step S201 is performed.

In S206, the second motor is turned off.

In S207, three electronic switches, the high-side or low-side switches, of the second driver circuit are controlled to turn on simultaneously.

In conjunction with FIGS. 1 and 8 to 10, the second controller 5732 is electrically connected to the third sensor 5721 and the fourth sensor 5722 and configured to acquire the angle of the operation member 200c in the front and rear direction and the angle of the deflector 51 in the up and down direction, separately. Specifically, the second controller 5732 acquires, in real time, the third electrical signal outputted from the third sensor 5721 and the fourth electrical signal outputted from the fourth sensor 5722 and controls an on state of the second motor 551 based on the third electrical signal and the fourth electrical signal. Specifically, the second controller 5732 sets the preset fourth electrical signal based on the acquired third electrical signal and compares the preset fourth electrical signal with the acquired fourth electrical signal. When the fourth electrical signal is different from the preset electrical signal, the second motor 551 is controlled to start to drive the deflector 51 to rotate about the second axis so that the angle of the deflector 51 in the up and down direction corresponds to the angle of the operation member 200c in the front and rear direction. After the second motor 551 is started, the second controller 5732 acquires the third electrical signal and the fourth electrical signal in real time until the acquired fourth electrical signal is the preset fourth electrical signal, and the second motor 551 is controlled to turn off after a period of time.

In conjunction with FIGS. 1 and 8 to 10, specifically, the operation member 200c is rotatable within an angle range of about 0° to 50° in the front and rear direction, and the deflector 51 is rotatable about the second axis within an angle range of about 0° to 65°. That the angle of the deflector 51 in the up and down direction corresponds to the angle of the operation member 200c in the front and rear direction may be understood as that when a current angle of the operation member 200c is 0°, the angle of the deflector 51 may be set to 0°; when the current angle of the operation member 200c is 50°, the angle of the deflector 51 may be set to 65°; when the current angle of the operation member 200c is 10°, the angle of the deflector 51 may be set to 13°.

It is to be noted that referring to FIGS. 8 to 10, the deflector 51 and the snow throwing member 52 are independently controlled in the examples of the present invention. It is to be understood that the user may control the operation member 200c to rotate in the front and rear direction and the left and right direction simultaneously. In this case, the first controller 5731 controls the first driver circuit 5733 to drive the first motor 541 to operate, so as to control the snow throwing member 52 to rotate by a corresponding angle about the first axis. The second controller 5732 controls the second driver circuit 5734 to drive the second motor 551 to operate, so as to control the deflector 51 to rotate by a corresponding angle about the second axis.

The basic principles, main features, and advantages of this invention are shown and described above.

**Claims**

1. A hand-propelled working machine (1), which is a snow thrower, comprising:

   a body (100);
   a traveling wheel group (30) connected to the body and comprising wheels (311);
   a motor (101) comprising a motor shaft connected to the wheels;
   a controller (400) electrically connected to the motor and configured to output a control signal to control the motor to rotate;
   a transmission mechanism (600) connected between the motor shaft and the wheels to implement transmission and having a first state and a second state, wherein when the transmission mechanism is in the second state, the wheels are rotatable freely relative to the motor shaft; and
   an operation member (200a) operated to have at least a first operation state for controlling the motor to start up and a second operation state for controlling the motor to shut down;
   wherein the controller is configured to set a target rotational speed of the motor to a negative rotational speed when the operation member is switched from the first operation state to the second operation state, so that the motor (101) rotates reversely, so that the transmission mechanism is switchable from the first state to the second state;
   wherein the controller comprises a rotational speed loop control module (410) whose input comprises the target rotational speed of the motor;
   **characterized in that**
   the controller is configured to control the rotational speed of the motor by using a vector control strategy, and in the vector control strategy, a proportional-integral (PI) controller is provided to perform closed-loop adjustment on the rotational speed of the motor.

2. The hand-propelled working machine according to claim 1, wherein when the operation member is in the first operation state and the transmission mechanism is in the first state, the motor is capable of driving, in response to the control signal outputted from the controller, the wheels to rotate.

3. The hand-propelled working machine according to claim 1, wherein the controller further comprises a current loop control module (420), and the current loop control module and the rotational speed loop control module both adopt the vector control strategy.

4. The hand-propelled working machine according to claim 1, wherein the controller is further configured to acquire a reverse rotation parameter of the motor and control, based on the acquired reverse rotation parameter, the motor to shut down.

5. The hand-propelled working machine according to claim 4, wherein the reverse rotation parameter of the motor comprises a number of revolutions of reverse rotation or a time of reverse rotation of the motor.

6. The hand-propelled working machine according to claim 5, wherein the controller is configured to, when the number of revolutions of reverse rotation is greater than or equal to a first threshold, control the motor to shut down.

7. The hand-propelled working machine according to claim 6, wherein the first threshold is greater than or equal to 1 revolution and less than or equal to 100 revolutions.

8. The hand-propelled working machine according to claim 5, wherein the controller is configured to, when acquiring that the time of reverse rotation of the motor is greater than or equal to a second threshold, control the motor to shut down.

9. The hand-propelled working machine according to claim 8, wherein the second threshold is greater than or equal to 10 ms and less than or equal to 500 ms.

10. The hand-propelled working machine according to claim 1, wherein an absolute value of the negative rotational speed is greater than or equal to 100 rpm.

11. The hand-propelled working machine according to claim 1, further comprising a handle connected to the body; wherein the operation member is operated to be rotatable relative to the handle.

12. The hand-propelled working machine according to claim 11, wherein the operation member comprises a trigger.

13. The hand-propelled working machine according to claim 1, wherein the transmission mechanism comprises a clutch (500).

14. The hand-propelled working machine according to claim 13, wherein the clutch has a locked state and an unlocked state; and when the clutch is in the unlocked state, the wheels are rotatable freely relative to the motor.

15. The hand-propelled working machine according to claim 13,

wherein the clutch comprises a transmission shaft (501) and a movable member (502),
wherein the transmission shaft is driven by the motor shaft to rotate to drive the wheels to rotate;
the movable member moves between a locked position and an unlocked position relative to the transmission shaft;
when the movable member is at the locked position, the transmission shaft drives the wheels to rotate; and
when the movable member is at the unlocked position, the wheels are rotatable freely relative to the transmission shaft.

**Patentansprüche**

1. Eine handgeführte Arbeitsmaschine (1), die eine Schneefräse ist, umfassend:

einen Körper (100);
eine mit dem Körper verbundene Fahrrollengruppe (30), die Räder (311) umfasst;
einen Motor (101), der eine mit den Rädern verbundene Motorwelle umfasst;
eine Steuereinheit (400), die elektrisch mit dem Motor verbunden ist und eingerichtet ist, ein Steuersignal auszugeben, um den Motor zum Rotieren anzusteuern;
einen zwischen der Motorwelle und den Rädern angeordneten Übertragungsmechanismus (600), der zur Übertragung dient und einen ersten Zustand und einen zweiten Zustand aufweist, wobei, wenn sich der Übertragungsmechanismus im zweiten Zustand befindet, die Räder relativ zur Motorwelle frei drehbar sind; und
ein Betätigungselement (200a), das so betätigt wird, dass es mindestens einen ersten Betätigungszustand zum Starten des Motors und einen zweiten Betätigungszustand zum Abschalten des Motors aufweist;
wobei die Steuereinheit eingerichtet ist, eine Zieldrehzahl des Motors auf eine negative Drehzahl zu setzen, wenn das Betätigungselement vom ersten Betätigungszustand in den zweiten Betätigungszustand übergeht, sodass der Motor (101) rückwärts rotiert, sodass der Übertragungsmechanismus vom ersten Zustand in den zweiten Zustand schaltbar ist;
wobei die Steuereinheit ein Drehzahlregelkreismodul (410) umfasst, dessen Eingang die Zieldrehzahl des Motors umfasst;
**dadurch gekennzeichnet, dass**
die Steuereinheit eingerichtet ist, die Drehzahl des Motors mittels einer Vektorregelstrategie zu steuern, wobei bei der Vektorregelstrategie ein Proportional-Integral(PI)-Regler vorgesehen ist, um eine geschlossene Regelung der Motordrehzahl durchzuführen.

2. Die handgeführte Arbeitsmaschine nach Anspruch 1, wobei der Motor, wenn sich das Betätigungselement im ersten Betätigungszustand befindet und sich der Übertragungsmechanismus im ersten Zustand befindet, in der Lage ist, in Reaktion auf das von der Steuereinheit ausgegebene Steuersignal die Räder in Rotation zu versetzen.

3. Die handgeführte Arbeitsmaschine nach Anspruch 1, wobei die Steuereinheit ferner ein Stromregelkreismodul (420) umfasst und wobei sowohl das Stromregelkreismodul als auch das Drehzahlregelkreismodul die Vektorregelstrategie anwenden.

4. Die handgeführte Arbeitsmaschine nach Anspruch 1, wobei die Steuereinheit ferner eingerichtet ist, einen Rückwärtsrotationsparameter des Motors zu erfassen und den Motor basierend auf dem erfassten Rückwärtsrotationsparameter abzuschalten.

5. Die handgeführte Arbeitsmaschine nach Anspruch 4, wobei der Rückwärtsrotationsparameter des Motors eine Anzahl der Rückwärtsdrehungen oder eine Rückwärtsrotationsdauer des Motors umfasst.

6. Die handgeführte Arbeitsmaschine nach Anspruch 5, wobei die Steuereinheit eingerichtet ist, den Motor abzuschalten, wenn die Anzahl der Rückwärtsdrehungen größer oder gleich einem ersten Schwellenwert ist.

7. Die handgeführte Arbeitsmaschine nach Anspruch 6, wobei der erste Schwellenwert größer oder gleich 1 Umdrehung und kleiner oder gleich 100 Umdrehungen ist.

8. Die handgeführte Arbeitsmaschine nach Anspruch 5, wobei die Steuereinheit eingerichtet ist, den Motor abzuschalten, wenn die Rückwärtsrotationsdauer des Motors größer oder gleich einem zweiten Schwellenwert ist.

9. Die handgeführte Arbeitsmaschine nach Anspruch 8, wobei der zweite Schwellenwert größer oder gleich 10 ms und kleiner oder gleich 500 ms ist.

10. Die handgeführte Arbeitsmaschine nach Anspruch 1, wobei ein Absolutwert der negativen Drehzahl größer oder gleich 100 U/min ist.

11. Die handgeführte Arbeitsmaschine nach Anspruch 1, ferner umfassend einen mit dem Körper verbundenen Griff, wobei das Betätigungselement so betätigt wird, dass es relativ zum Griff drehbar ist.

12. Die handgeführte Arbeitsmaschine nach Anspruch 11, wobei das Betätigungselement einen Auslöser umfasst.

13. Die handgeführte Arbeitsmaschine nach Anspruch 1, wobei der Übertragungsmechanismus eine Kupplung (500) umfasst.

14. Die handgeführte Arbeitsmaschine nach Anspruch 13, wobei die Kupplung einen verriegelten Zustand und einen entriegelten Zustand aufweist, und wobei, wenn sich die Kupplung im entriegelten Zustand befindet, die Räder relativ zum Motor frei drehbar sind.

15. Die handgeführte Arbeitsmaschine nach Anspruch 13, wobei die Kupplung eine Antriebswelle (501) und ein bewegliches Element (502) umfasst,

> wobei die Antriebswelle durch die Motorwelle in Rotation versetzt wird, um die Räder anzutreiben; das bewegliche Element sich relativ zur Antriebswelle zwischen einer verriegelten Position und einer entriegelten Position bewegt; wenn sich das bewegliche Element in der verriegelten Position befindet, die Antriebswelle die Räder antreibt; und wenn sich das bewegliche Element in der entriegelten Position befindet, die Räder relativ zur Antriebswelle frei drehbar sind.

**Revendications**

1. Une machine de travail à propulsion manuelle (1), qui est une souffleuse à neige, comprenant :

> un corps (100) ;
> un groupe de roues motrices (30) relié au corps et comprenant des roues (311) ;
> un moteur (101) comprenant un arbre moteur relié aux roues ;
> un dispositif de commande (400) relié électriquement au moteur et conçu pour émettre un signal de commande afin de commander la rotation du moteur ;
> un mécanisme de transmission (600) connecté entre l'arbre moteur et les roues pour effectuer la transmission et présentant un premier état et un second état, dans lequel, lorsque le mécanisme de transmission est dans le second état, les roues peuvent tourner librement par rapport à l'arbre moteur ; et
un organe d'actionnement (200a) actionné pour adopter au moins un premier état d'actionnement pour commander le démarrage du moteur et un second état d'actionnement pour commander l'arrêt du moteur ;
dans lequel le dispositif de commande est conçu pour définir une vitesse de rotation cible du moteur comme une vitesse de rotation négative lorsque l'organe d'actionnement est commuté du premier état d'actionnement au second état d'actionnement, de manière à ce que le moteur (101) tourne en sens inverse, de sorte que le mécanisme de transmission puisse être commuté du premier état au second état ;
dans lequel le dispositif de commande comprend un module de commande en boucle de vitesse de rotation (410) dont l'entrée comprend la vitesse de rotation cible du moteur ;
**caractérisé en ce que**
le dispositif de commande est conçu pour commander la vitesse de rotation du moteur à l'aide d'une stratégie de commande vectorielle, et dans la stratégie de commande vectorielle, un régulateur proportionnel-intégral (PI) est prévu pour effectuer un réglage en boucle fermée de la vitesse de rotation du moteur.

2. La machine de travail à propulsion manuelle selon la revendication 1, dans lequel lorsque l'organe d'actionnement est dans le premier état d'actionnement et que le mécanisme de transmission est dans le premier état, le moteur est apte, en réponse au signal de commande émis par le dispositif de commande, à entraîner la rotation des roues.

3. La machine de travail à propulsion manuelle selon la revendication 1, dans lequel le dispositif de commande comprend en outre un module de commande en boucle de courant (420), et lesdits modules de commande en boucle de courant et de vitesse de rotation appliquent tous deux la stratégie de commande vectorielle.

4. La machine de travail à propulsion manuelle selon la revendication 1, dans lequel le dispositif de commande est en outre conçu pour acquérir un paramètre de rotation inverse du moteur et commander l'arrêt du moteur sur la base dudit paramètre.

5. La machine de travail à propulsion manuelle selon la revendication 4, dans lequel le paramètre de rotation inverse du moteur comprend un nombre de tours de rotation inverse ou un temps de rotation inverse du moteur.

6. La machine de travail à propulsion manuelle selon la revendication 5, dans lequel le dispositif de commande est conçu pour, lorsque le nombre de tours de rotation inverse est supérieur ou égal à un premier seuil, commander l'arrêt du moteur.

7. La machine de travail à propulsion manuelle selon la revendication 6, dans lequel le premier seuil est supérieur ou égal à 1 tour et inférieur ou égal à 100 tours.

8. La machine de travail à propulsion manuelle selon la revendication 5, dans lequel le dispositif de commande est conçu pour, lorsqu'il détermine que le temps de rotation inverse du moteur est supérieur ou égal à un second seuil, commander l'arrêt du moteur.

9. La machine de travail à propulsion manuelle selon la revendication 8, dans lequel le second seuil est supérieur ou égal à 10 ms et inférieur ou égal à 500 ms.

10. La machine de travail à propulsion manuelle selon la revendication 1, dans lequel une valeur absolue de la vitesse de rotation négative est supérieure ou égale à 100 tr/min.

11. La machine de travail à propulsion manuelle selon la revendication 1, comprenant en outre une poignée reliée au corps ; dans lequel l'organe d'actionnement est conçu pour être rotatif par rapport à ladite poignée.

12. La machine de travail à propulsion manuelle selon la revendication 11, dans lequel l'organe d'actionnement comprend une gâchette.

13. La machine de travail à propulsion manuelle selon la revendication 1, dans lequel le mécanisme de transmission comprend un embrayage (500).

14. La machine de travail à propulsion manuelle selon la revendication 13, dans lequel l'embrayage présente un état verrouillé et un état déverrouillé ; et lorsque l'embrayage est dans l'état déverrouillé, les roues peuvent tourner librement par rapport au moteur.

15. La machine de travail à propulsion manuelle selon la revendication 13,

dans lequel l'embrayage comprend un arbre de transmission (501) et un élément mobile (502), dans lequel l'arbre de transmission est entraîné en rotation par l'arbre moteur pour entraîner la rotation des roues ; l'élément mobile se déplace entre une position verrouillée et une position déverrouillée par rapport à l'arbre de transmission ;

lorsque l'élément mobile est en position verrouillée, l'arbre de transmission entraîne la rotation des roues ; et

lorsque l'élément mobile est en position déverrouillée, les roues peuvent tourner librement par rapport à l'arbre de transmission.

FIG. 1

1

FIG. 2

FIG. 3

FIG. 4

FIG. 5

400

410 420

```
┌─────────────────────────────────────────────────────────┐
│   ┌─────────────────┐          ┌─────────────────┐       │
│   │ Rotational speed│          │                 │       │
│ ──┼─▶ loop control  ├──────────▶  Current loop   │       │
│   │     module      │          │ control module  │       │
│   └─────────────────┘          └─────────────────┘       │
└─────────────────────────────────────────────────────────┘
```

FIG. 6

```
┌──────────────────────────────────────────────────────────┐
│                                                          │  S1
│   Acquire an operation state of an operation member      │──
│                                                          │
└──────────────────────────────────────────────────────────┘
                           │
                           ▼
┌──────────────────────────────────────────────────────────┐
│ When the operation member is switched from a first operation│
│  state to a second operation state, set a target rotational speed│  S2
│ of a motor to a first rotational speed, where the first rotational│──
│       speed is a negative rotational speed               │
└──────────────────────────────────────────────────────────┘
                           │
                           ▼
┌──────────────────────────────────────────────────────────┐
│ Based on the first rotational speed, control a clutch to switch│  S3
│        from a first state to a second state              │──
└──────────────────────────────────────────────────────────┘
```

FIG. 7

FIG. 8

FIG. 9

57

571

5711 First sensor

5712 Second sensor

5731 573 5733 541

First controller → First driver circuit → First motor

5721 Third sensor

5722 Fourth sensor

Second controller → Second driver circuit → Second motor

5732 5734 551

572

FIG. 10

S101

Acquire a first electrical signal outputted from a first sensor and a second electrical signal outputted from a second sensor

S102

Acquire a preset second electrical signal

S103

Whether the second electrical signal is equal to the preset second electrical signal

No → S104 Control a first motor to start

Yes

S105

Whether the first motor is started

No

Yes

S106

Turn off the first motor

S107

Control three electronic switches, high-side or low-side switches, of a first driver circuit to turn on simultaneously

FIG. 11

S201

Acquire a third electrical signal outputted from a third sensor and a fourth electrical signal outputted from a fourth sensor

S202

Acquire a preset fourth electrical signal

S203

Whether the fourth electrical signal is equal to the preset fourth electrical signal

No

S204

Control a second motor to start

Yes

S205

Whether the second motor is started

No

Yes

S206

Turn off the second motor

S207

Control three electronic switches, high-side or low-side switches, of a second driver circuit to turn on simultaneously

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220071096 A1

- CN 202210652688